# EUROPÄISCHE PATENTANMELDUNG

(11) **EP 2 495 175 A2**
(43) Veröffentlichungstag der Anmeldung: **05.09.2012**
(21) Anmeldenummer: 12001003.8
(22) Anmeldetag: 16.02.2012
(51) Int. Cl.: B65B 7/16, B65B 31/02, B65B 51/08, B65B 51/10, B65B 51/14

(54) **Abfülllinie mit einem Füller für ein Gefäß und ein Verfahren für das befüllen von Gefäßen**

(30) Priorität: 01.03.2011 DE 102011012762; 01.06.2011 DE 102011103767
(71) Anmelder: Hipp & Co, 6072 Sachseln (CH)
(72) Erfinder: Heil, Gerhard, 85276 Pfaffenhofen an der Ilm (DE); Moser, Gerhard, 4801 Traunkirchen (AT); Tomusch, Frithjof, 4810 Gmunden (AT)
(74) Vertreter: Castell, Klaus

(57) **Zusammenfassung**

Abfülllinie mit einem Füller für ein Gefäß und einem Verschließer für das Gefäß, bei der der Raum zwischen Füller und Gefäß eine Raumtemperatur von über 80 °C aufweist.

## Beschreibung

Die Erfindung betrifft eine Abfülllinie mit einer Sterilisiereinrichtung für das fertig zubereitete Produkt, einem Füller für ein Gefäß, einer zwischen Sterilisiereinrichtung und Füller angeordneten Kühleinrichtung für das fertig zubereitete Produkt, einem Verschließer für das Gefäß und einer nach dem Verschließer angeordneten Kühleinrichtung für das Gefäß sowie ein Verfahren für das Befüllen von Gefäßen.

Derartige Abfülllinien werden insbesondere in der Lebensmittelindustrie zum Abfüllen von flüssigen oder breiartigen Medien verwendet, die jedoch auch stückige Bestandteile aufweisen können.

Für viele Produkte wird gefordert, dass das abgefüllte Medium keimfrei ist. Hierfür kann das abgefüllte Medium nach der Abfülllinie in einem Autoklaven sterilisiert werden. Außerdem kann das Medium vor der Abfüllung, beispielsweise mit einer UHT-Anlage sterilisiert werden. Darüber hinaus ist bekannt, den Abfüllvorgang in einem sterilen Bereich durchzuführen. Hierzu kann ein gekapselter Raum für den Abfüllvorgang vorgesehen werden, der unter sterilen Bedingungen gehalten wird.

Diese Verfahren sind aufwändig im Hinblick auf die Anlagentechnik und sie sind sehr energieaufwändig.

Der Erfindung liegt daher die Aufgabe zu Grunde, eine einfache gattungsgemäße Abfülllinie bereitzustellen, die eine schonende sterile Abfüllung, insbesondere von Lebensmitteln wie beispielsweise Babykost, ermöglich.

Diese Aufgabe wird mit einer gattungsgemäßen Abfülllinie gelöst, bei der die Umgebung zwischen Füller und Gefäß eine Umgebungstemperatur von 70 °C bis 130 °C aufweist.

Verfahrensmäßig wird diese Aufgabe mit einem Verfahren zum Befüllen von Gefäßen gelöst, bei dem ein fertig zubereitetes Produkt auf einer Temperatur zwischen 120 °C und 130 °C solange erhitzt wird bis es steril ist, das sterilisierte Produkt auf eine Temperatur zwischen 80 °C und 100 °C abgekühlt wird, die Gefäße mit dem abgekühlten Produkt bei einer Umgebungstemperatur von 70 °C bis 130 °C mit dem Produkt befüllt und verschlossen werden und sofort anschließend das befüllte, verschlossene Gefäß abgekühlt wird.

Die Erhitzung nicht nur des Produktes sondern auch der Umgebung, in der das Produkt abgefüllt wird, ermöglicht es, sterile Abfüllbedingungen zur Verfügung zu stellen, bei denen nicht nur ein Eindringen von Keimen verhindert wird, sondern die hohe Temperatur auch eingedrungene Keime abtötet. Die Erhitzung der Umgebung zwischen Füller und Gefäß ermöglicht somit eine sterile Abfüllung in steriler Umgebung.

Vorteilhaft ist es, wenn die Umgebung zwischen Verschließer und Gefäß eine Umgebungstemperatur von 70 °C bis 130 °C aufweist. Hierzu kann ein weiterer Raum vorgesehen werden oder es kann im gleichen Raum abgefüllt und verschlossen werden. Dies hat zur Folge, dass bis zum Verschließen des Gefäßes das Gefäß in einem sterilen Raum transportiert wird und somit auch nach der Befüllung bis zur Verschließung eine Kontamination des Gefäßes oder des Füllgutes ausgeschlossen ist.

Versuche haben gezeigt, dass die optimale Umgebungstemperatur zwischen 70 °C und 90 °C liegt. Hierbei ist zu beachten, dass die durch den Raum geführten Gefäße den Raum abkühlen können und daher darauf zu achten ist, dass die Raumtemperatur einerseits hoch genug eingeregelt wird und andererseits eine thermische Belastung des Füllgutes und der Abfüllanlage minimiert sein sollte.

Um eine Oxidation des Füllgutes zu vermeiden wird vorgeschlagen, dass die Umgebung weniger als 5 % Sauerstoff aufweist.

Eine vorteilhafte Atmosphäre für die Abfüllung und das Verschließen der Gefäße wird erzielt, wenn die Umgebung eine Mischung aus zumindest 95 % Dampf und Stickstoff aufweist. Ein derartiges Dampfstickstoff-Gemisch ist auf einfache Art und Weise bei hoher Temperatur zur Verfügung zu stellen.

Um einen schnellen Abfüllvorgang zu gewährleisten, wird vorgeschlagen, dass die Gefäße am Füller entlang geführt werden. Die Gefäße sollten daher relativ zum Füller und Verschließer lateral beweglich angeordnet sein. Hierzu können beispielsweise Becher auf einem Förderband unterhalb von Füller und Verschließer entlang gefördert werden, sodass sie erst in einen abgeschlossenen erhitzten Raum eintreten, anschließend befüllt und verschlossen werden und danach den erhitzen Raum verlassen.

Die abzufüllenden Gefäße können beispielsweise aus Glas sein, damit sie im erhitzen Raum und bei der Befüllung nicht beschädigt werden. Besonders vorteilhaft ist ein Gefäß, das Polypropylen aufweist.

Der Raum kann gegenüber der Umgebung geringfügig unter Überdruck gehalten werden, damit die Atmosphäre im Raum erhalten bleibt und von außen keine Luft in den Raum eindringt. Um die Gefäße mit geringem Energieverlust in den Raum zu führen und aus ihm wieder heraus zu führen wird vorgeschlagen, dass die Umgebung von einem Raum umgrenzt ist, der mindestens eine Schleuse aufweist.

Da im Raum insbesondere an den Gefäßen eine Abkühlung nicht zu vermeiden ist, wird vorgeschlagen, dass der Raum von einer Heißgasatmosphäre durchströmt ist. Dies ermöglicht es, den Raum auf einer hohen Temperatur zu halten und je nach Strömungsrichtung auch ein Temperaturgefälle zu erzeugen. Beispielsweise kann die Heißgasatmosphäre im Bereich von Füller und/oder Verschließer dem Raum zugeführt werden und beim Ein- oder Austritt der Gefäße den Raum verlassen.

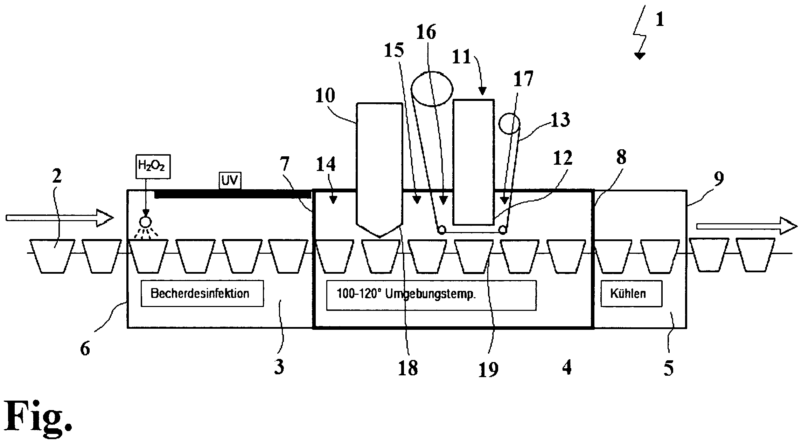

Eine vorteilhafte Variante sieht vor, dass die Heißgasatmosphäre entgegen der Richtung der Gefäße strömt. Dadurch werden die dem Füller zugeführten Gefäße im Gegenstrom erhitzt und die vom Füller und Verschließer weggeführten Gefäße können leichter abkühlen.
Ein vorteilhaftes Ausführungsbeispiel einer erfindungsgemäßen Abfülllinie ist in der Zeichnung dargestellt und wird im Folgenden näher erläutert.
Es zeigt die einzige Figur schematisch eine Abfülllinie mit Füller und Verschließer.

Die Abfülllinie 1 dient der Abfüllung von Gefäßen 2, die als oben offene Becher aus Glas oder Polypropylen ausgebildet sind. Diese Gefäße 2 werden auf einem Förderband (nicht gezeigt) von links nach rechts gefördert. Dabei passieren sie einen Desinfektionsraum 3, einen Füll- und Verschließraum 4 und einen Abkühlraum 5. Alle Räume sind durch Luftschleusen 6 bis 9 voneinander getrennt. Diese Luftschleusen können als echte Luftschleuse mit Schleusenkammern ausgebildet sein oder bewegliche Vorhänge, oder eine Gasschleuse aufweisen, bei der ein Gasvorhang den inneren Luftbereich vom äußeren Luftbereich trennt.

Die Gefäße 2 wandern somit zunächst in den Desinfektionsraum 3, in dem sie mit H₂O₂ zur Desinfektion besprüht werden und anschließend mit UV-Licht bestrahlt werden. Danach gelangen die Gefäße 2 in den Füll- und Verschließraum 4, in dem der Füller 10 das Gefäß 2 mit einem heißen Lebensmittel (nicht gezeigt) befüllt. Anschließend wird mit dem Verschließer 11 ein folienartiger Deckel (nicht gezeigt) auf die Gefäßöffnung geklebt, um das Gefäß steril zu verschließen. Hierbei ist der Kopf 12 des Füllers 11 innerhalb des Füll- und Verschließraums 4 angeordnet und der Träger 13 für die Verschlussdeckel wird durch den Füll- und Verschließraum 4 hindurch bewegt.

Nach dem Abfüllen und Verschließen gelangt das Gefäß in den Kühlraum 5, in dem es abgekühlt wird, um anschließend als fertiges Produkt die Abfülllinie zu verlassen.

In den Füll- und Verschließraum 4 wird an den Einlassbereichen 14 bis 17 unter leichtem Überdruck eine Heißgasatmosphäre zugeführt, die insbesondere den Abfüllbereich 18 und den Verschließbereich 19 auf einer Raumtemperatur über 80 °C wie beispielsweise zwischen 100 °C und 120 °C hält. Diese Heißgasatmosphäre besteht zu 95 % aus einem Dampfstickstoff-Gemisch, das entgegen der Bewegungsrichtung der Gefäße strömt.

Die Gas- und Temperaturparameter für die Abfüllung und das Verschließen werden dabei so eingeregelt, dass das befüllte Gefäß nach der Abkühlung nicht mehr autoklaviert werden muss. Dabei kann die Heißhaltezeit der befüllten Gefäße dazu verwendet werden, das Produkt in den Gefäßen so lange zu garen, bis es abgekühlt wird. Dadurch entsteht ein Kochprozess, der sich von der Erhitzung des Produktes über den Abfüllvorgang bis in das Gefäß hinein erstreckt. Hierdurch kann die vor der Abfüllung liegende Kochzeit verkürzt werden.

## Patentansprüche

1. Abfülllinie mit einer Sterilisiereinrichtung für das fertig zubereitete Produkt, einem Füller für ein Gefäß, einer zwischen Sterilisiereinrichtung und Füller angeordneten Kühleinrichtung für das fertig zubereitete Produkt, einem Verschließer für das Gefäß und einer nach dem Verschließer angeordneten Kühleinrichtung für das Gefäß, ***dadurch gekennzeichnet, dass*** die Umgebung zwischen Füller und Gefäß eine Umgebungstemperatur von 70 °C bis 130 °C aufweist.

2. Abfülllinie nach Anspruch 1, ***dadurch gekennzeichnet, dass*** die Umgebung zwischen Verschließer und Gefäß eine Umgebungstemperatur von 70 °C bis 130 °C aufweist.

3. Abfülllinie nach einem der vorhergehenden Ansprüche, ***dadurch gekennzeichnet, dass*** die Umgebungstemperatur zwischen 70 °C und 90 °C liegt.

4. Abfülllinie nach einem der vorhergehenden Ansprüche, ***dadurch gekennzeichnet, dass*** die Umgebung weniger als 5 % Sauerstoff aufweist.

5. Abfülllinie nach einem der vorhergehenden Ansprüche, ***dadurch gekennzeichnet, dass*** die Umgebung eine Mischung aus zumindest 95 % Dampf und Stickstoff aufweist.

6. Abfülllinie nach einem der vorhergehenden Ansprüche, ***dadurch gekennzeichnet, dass*** die Gefäße relativ zu Füller und Verschließer lateral beweglich angeordnet sind.

7. Abfülllinie nach einem der vorhergehenden Ansprüche, ***dadurch gekennzeichnet, dass*** das Gefäß Polypropylen aufweist.

8. Abfülllinie nach einem der vorhergehenden Ansprüche, ***dadurch gekennzeichnet, dass*** das Gefäß Glas aufweist.

9. Abfülllinie nach einem der vorhergehenden Ansprüche, ***dadurch gekennzeichnet, dass*** die Umgebung von einem Raum umgrenzt ist, der mindestens eine Schleuse aufweist.

10. Verfahren zum Befüllen von Gefäßen, bei dem ein fertig zubereitetes Produkt auf einer Temperatur zwischen 120 °C und 130 °C solange erhitzt wird bis es steril ist, das sterilisierte Produkt auf eine Temperatur zwischen 80 °C und 100 °C abgekühlt wird, die Gefäße mit dem abgekühlten Produkt bei einer Umgebungstemperatur von 70 °C bis 130 °C mit dem Produkt befüllt und verschlossen werden und sofort anschließend das befüllte, verschlossene Gefäß abgekühlt wird.

11. Verfahren nach Anspruch 10, ***dadurch gekennzeichnet, dass*** die Gefäße in einem geschlossenen Raum befüllt werden.

12. Verfahren nach Anspruch 11, ***dadurch gekennzeichnet, dass*** der Raum von einer Heißgasatmosphäre durchströmt ist.

13. Verfahren nach Anspruch 12, ***dadurch gekennzeichnet, dass*** die Heißgasatmosphäre entgegen der Richtung der Gefäße strömt.

14. Verfahren nach einem der Ansprüche 10 bis 13, ***dadurch gekennzeichnet, dass*** die Gefäße bei einer Umgebungstemperatur zwischen 70 °C und 90 °C befüllt werden.
